# EUROPÄISCHE PATENTSCHRIFT

(11) **EP 2 318 813 B1**
(45) Veröffentlichungstag und Bekanntmachung des Hinweises auf die Patenterteilung: **28.03.2012**
(21) Anmeldenummer: 09781532.8
(22) Anmeldetag: 06.08.2009
(51) Int. Cl.: H04L 12/40, G05B 19/042, G01D 21/00, G06F 1/32

(54) **VERFAHREN ZUM BETREIBEN EINES SYSTEMS VON FELDGERÄTEN**
METHOD FOR OPERATING A SYSTEM OF FIELD DEVICES
PROCÉDÉ POUR FAIRE FONCTIONNER UN SYSTÈME D'APPAREILS DE TERRAIN

(30) Priorität: 26.08.2008 DE 102008039696
(43) Veröffentlichungstag der Anmeldung: 11.05.2011
(73) Patentinhaber: Endress+Hauser Wetzer GmbH+CO. KG, 87484 Nesselwang (DE)
(72) Erfinder: KONRAD, Stephan, 87669 Rieden (DE); PÖLLATH, Rainer, 87494 Rückholz (DE)
(74) Vertreter: Andres, Angelika Maria
(86) Internationale Anmeldenummer: PCT/EP2009/060174
(87) Internationale Veröffentlichungsnummer: WO 2010/026015

(56) Entgegenhaltungen:
- WO-A1-2005/103851
- DE-A1-102006 036 770

## Beschreibung

Die Erfindung bezieht sich auf ein Verfahren zum Betreiben eines Systems von Feldgeräten, wobei das System mindestens zwei Feldgeräte aufweist, und wobei es sich bei den Feldgeräten insbesondere um Messgeräte und/oder Aktoren und/oder Anzeigegeräte handelt. Das System ist beispielsweise ein System der Prozessautomatisierung.

In der modernen Mess- und Regeltechnik sind oft mehrere Feldgeräte, insbesondere Messgeräte, Aktoren oder auch Anzeigegeräte, über einen Bus miteinander verbunden. Hierfür existieren auch bereits unterschiedliche Datenprotokolle (4...20 mA-Signale, Foundation Fieldbus oder Profibus PA).

Eine Problematik liegt üblicherweise in der Energieversorgung der einzelnen Geräte.

DE 10 2006 036770 offenbart ein System von Feldgeräten, die in Reihe über eine Power-Over-Ethernet Verbindung zusammengeschaltet sind und dieser Reihenschaltung eine Energieversorgungseinheit vorgeschaltet ist. Ein Feldgerät kann ein Nachbargerät aktivieren, indem es eine Leistungsanforderung des Nachbargerätes an die Versorgungseinheit weiterleitet und nach Empfang der angeforderten Leistung diese dem Nachbargerät über einen Anschlussport zur Verfügung stellt.

WO 2005/103851 betrifft ein Funkmodul für Feldgeräte mit Hilfe dessen herkömmliche Feldgeräte zu funkfähige und autarke Feldgeräte umgerüstet werden können. Derartige Feldgeräte können zu einem Funknetzwerk zusammengeschlossen werden. Um den Energieverbrauch zu minimieren, wird ein Feldgerät nur bei Bedarf durch sein Funkmodul mit Energie versorgt. Dies geschieht durch eine Aktivierungs-/ Deaktivierungsanforderung von einer übergeordneten Einheit.

Der Erfindung liegt die Aufgabe zugrunde, ein Verfahren zum Betreiben eines Systems von Feldgeräten vorzuschlagen, bei welchem insbesondere auf die Energieproblematik eingegangen wird.

Die Erfindung löst die Aufgabe dadurch, dass von einem ersten Feldgerät ein zweites Feldgerät aktiviert wird, und dass bei einer erfolgreichen Aktivierung eines vom ersten Feldgerät unterschiedlichen Feldgerätes das erste Feldgerät deaktiviert wird.

Eine Ausgestaltung sieht vor, dass das System mindestens drei Feldgeräte aufweist, und dass von dem ersten Feldgerät im Fall einer erfolglosen Aktivierung des zweiten Feldgerätes ein drittes Feldgerät aktiviert wird.

Eine Ausgestaltung beinhaltet, dass das System mehrere Feldgeräte aufweist, und dass von dem ersten Feldgerät im Fall einer erfolglosen Aktivierung des zweiten Feldgerätes solange weitere Feldgeräte aktiviert werden, bis eine Aktivierung eines weiteren Feldgerätes erfolgreich ist.

Eine Ausgestaltung sieht vor, dass von mindestens einem Feldgerät nach seiner Aktivierung ein Signal an das Feldgerät übermittelt wird, von welchem es aktiviert worden ist.

Eine Ausgestaltung beinhaltet, dass mindestens eine übergeordnete Einheit vorgesehen ist, dass von mindestens einem Feldgerät nach seiner Aktivierung durch ein anderes Feldgerät ein Signal an die übergeordnete Einheit übermittelt wird, und dass das übermittelte Signal von dem anderen Feldgerät empfangen wird, von welchem das Feldgerät aktiviert worden ist.

Eine Ausgestaltung sieht vor, dass mindestens eine übergeordnete Einheit vorgesehen ist, und dass von mindestens einem Feldgerät bei einer erfolglosen Aktivierung eines anderen Feldgerätes ein Signal an die übergeordnete Einheit übermittelt wird.

Eine Ausgestaltung beinhaltet, dass von einem Feldgerät die Aufgabe der übergeordneten Einheit erfüllt wird.

Eine Ausgestaltung sieht vor, dass von einem Leitsystem die Aufgabe der übergeordneten Einheit erfüllt wird.

Eine Ausgestaltung beinhaltet, dass bei einer Deaktivierung eines Feldgerätes die Energieversorgung des Feldgerätes unter einen einstellbaren Wert gesetzt wird.

Eine Ausgestaltung sieht vor, dass bei einer Deaktivierung eines Feldgerätes die Energieversorgung des Feldgerätes ausgeschaltet wird.

Eine Ausgestaltung beinhaltet, dass bei einer Deaktivierung eines Feldgerätes das Feldgerät von einer Spannungsversorgung getrennt wird.

Eine Ausgestaltung sieht vor, dass bei einer Aktivierung eines Feldgerätes die Energieversorgung des Feldgerätes über einen einstellbaren Wert gesetzt wird.

Eine Ausgestaltung beinhaltet, dass bei einer Aktivierung eines Feldgerätes das Feldgerät mit einer Spannungsversorgung verbunden wird.

Eine Ausgestaltung sieht vor, dass mindestens eine übergeordnete Einheit vorgesehen ist, und dass mindestens ein Feldgerät durch die übergeordnete Einheit aktiviert wird.

Beschrieben wird in der Erfindung somit ein Power- und Bus-Konzept für Feldgeräte in einem System von Feldgeräten. Bei dem erfindungsgemäßen Verfahren sind die Sensoren/Messgeräte oder Aktoren als Beispiele für die Feldgeräte die meiste Zeit vollständig ausgeschaltet, d.h. nicht in einem Standby- oder Sleepmodus, und werden nur bei Bedarf aktiviert, beispielsweise mit einer elektrischen Spannung versorgt. Die Aktivierung kann z.B. über eine Adresse, ein Logik-Signal, eine separate Verbindungsleitung oder über beliebig ausgeführte Informationen erfolgen. Durch das Abschalten/vollständige Deaktivieren der nicht benötigten Feldgeräte und dass alleinige Anschalten/Aktivieren der benötigten Feldgeräte wird nur eine geringe Menge an Energie benötigt (Energieminimum).

Einige Vorteile der Erfindung sind:
Es sind nur die benötigten Sensoren/Aktoren in Betrieb, während die übrigen Feldgeräte ohne Energieversorgung und abgeschaltet sind. Es gibt eine einfache Steuerung, über welche ein ausgefallenes Feldgerät bzw. mehrere ausgefallene Feldgeräte überbrückt werden. Insbesondere ergeben sich Vorteile für die Anwendung im explosionsgefährdeten Bereich, da weniger aktive Kapazitäten vorhanden sind. Da überdies die Verluste auf den Leitungen reduziert sind, sind längere Leitungslängen möglich. Die benötigte Leistung zur Versorgung wird geringer, da nur eine Minimalenergie benötigt wird. Somit lassen sich kleinere Netzteile einsetzen. Weiterhin sind so Systeme ohne Adressierung realisierbar. Die Position/Adresse ist durch den Ablauf in der Messkette gegeben. In dem Fall, dass die Feldgeräte gleich sind, lässt sich auch bei allen die gleiche Ausgestaltung verwenden. Daher wird insbesondere die Montage vereinfacht, da alles Gleichteile sind und keine explizite Adresse nötig ist.

Die Erfindung wird anhand der nachfolgenden Zeichnungen näher erläutert. Es zeigt:
Fig. 1: eine erste schematische Darstellung eines Systems von Feldgeräten, welches mit dem erfindungsgemäßen Verfahren betrieben wird, und
Fig. 2: eine detaillierte Darstellung des Systems der Fig. 1.

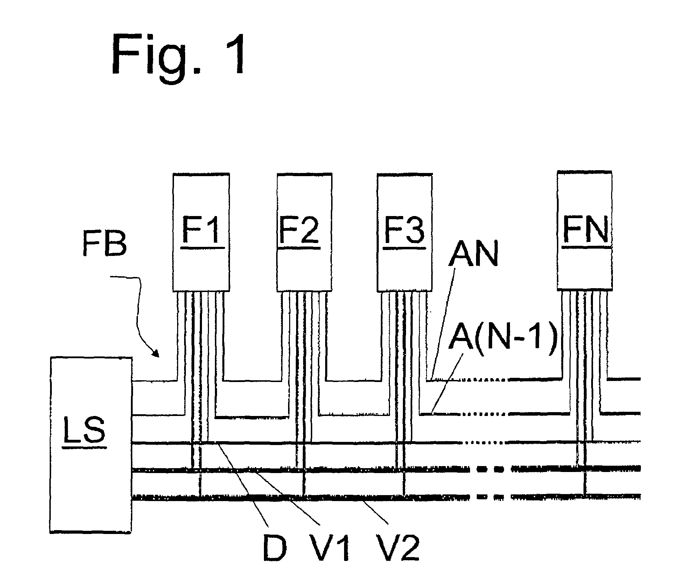

In der Fig. 1 sind mehrere Feldgeräte F1, F2, F3 bis FN dargestellt, welche über einen Feldbus FB mit einer übergeordneten Einheit LS, bei welcher es sich beispielhaft um ein Leitsystem handelt, verbunden sind. Bei den Feldgeräten handelt es sich beispielsweise um Messgeräte/Sensoren, Aktoren oder Anzeigegeräte. In einer Ausgestaltung handelt es sich beispielsweise um einzelne Temperatursensoren. Die Messgeräte können jedoch beispielsweise auch der Bestimmung und/oder Überwachung des Füllstands eines Mediums, dessen pH-Wert, dessen Durchfluss oder Massedurchfluss dienen.

Jeweils zwei benachbarte Feldgeräte sind über zwei Leitungen mit den Bezeichnungen bzw. dem Zweck: Aktivierung des n-ten Feldgerätes AN und Aktivierung des (n-1)-ten Feldgerätes A(N-1) miteinander verbunden. Die Feldgeräte sind zudem mit einer Datenleitung D und zwei Energieversorgungsleitungen V1 und V2 untereinander bzw. hier auch mit dem Leitsystem LS verbunden. Über die Datenleitung D werden vorzugsweise die Daten, d.h. bei Aktor-Feldgeräten die Steuerungsdaten der Aktoren, bei den Sensor-Feldgeräten die Messdaten oder auch die Parameterdaten und bei den Anzeige-Feldgeräten die darzustellenden Daten übermittelt. Über die beiden Versorgungsleitungen V1 und V2 wird die elektrische Energie zur Verfügung gestellt.

Ein Ablauf des erfindungsgemäßen Verfahrens ist beispielsweise folgender:
1. Ein erstes Feldgerät F1 wird durch das Leitsystem LS aktiviert, d.h. eingeschaltet. Hierauf schaltet sich das erste Feldgerät F1 auf die Versorgungsleitungen V1, V2. Dann arbeitet das Feldgerät, misst beispielsweise eine Prozessgröße.
2. Das erste Feldgerät F1 aktiviert ein zweites Feldgerät F2.
3. Das zweite Feldgerät F2 schaltet sich auf die Versorgungsleitungen V1, V2 und erzeugt ein Signal, welches es auf die Datenleitung D gibt. D.h. in diesem Augenblick sind zwei Feldgeräte F1 und F2 mit Energie versorgt.
4. Das erste Feldgerät F1 erkennt das erfolgreiche Aktivieren des zweiten Feldgerätes F2 und wird deaktiviert. D.h. nun ist nur noch das zweite Feldgerät F2 aktiv.
5. Das zweite Feldgerät F2 aktiviert das dritte Feldgerät F3 usw.

Dieser Ablauf gilt für alle entsprechend betriebenen Feldgeräte, welche am Feldbus FB angeschlossen sind. Es können dabei auch Feldgeräte angeschlossen sein, welche nicht mit dem erfindungsgemäßen Verfahren betrieben werden, sondern z.B. ständig aktiviert sind.

Tritt nach dem zweiten Schritt, d.h. nach der Aktivierung oder vielmehr der versuchten Aktivierung des zweiten Feldgerätes F2 durch das erste Feldgerät F1 ein Fehler auf, indem beispielsweise das zweite Feldgerät F2 keine Statusmeldung ausgibt, so erkennt dies das erste Feldgerät F1 und versucht die Aktivierung des nächsten Feldgerätes, d.h. des dritten Feldgerätes F3. Sollte das dritte Feldgerät F3 sich auch nicht aktivieren lassen, so wird der Versuch mit den nächst folgenden Feldgeräten fortgesetzt, bis das Aktivieren endlich gelingt. Das erfolglose Aktivieren wird in einer Ausgestaltung auch an das Leitsystem LS kommuniziert. Ist das Aktivieren eines der nachfolgenden Feldgeräte erfolgreich, ist dies insbesondere durch das derartig aktivierte Feldgerät quittiert worden, so schaltet sich das zweite Feldgerät F2 ab. Das Verfahren wird dann ausgehend von diesem aktivierten Feldgerät weiter ausgeführt.

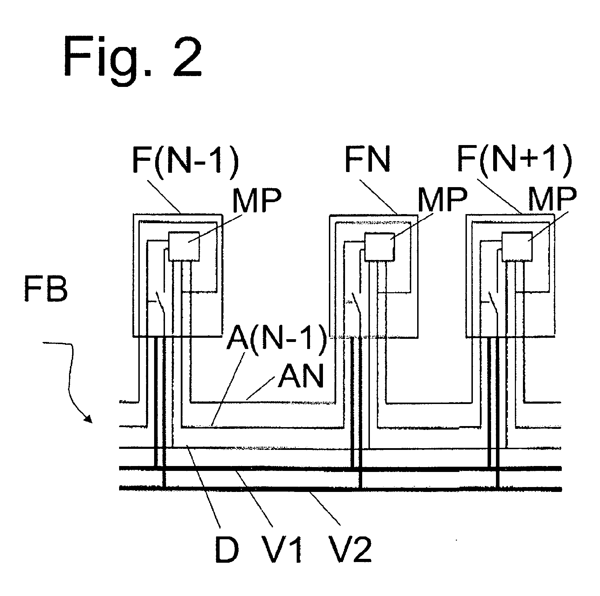

In der Fig. 2 sind drei Feldgeräte detaillierter dargestellt. Hierbei handelt es sich um die Felgeräte F(N-1), FN und F(N+1), also der Vorgänger (F(N-1)) und der Nachfolger (F(N+1)) des n-ten Feldgerätes FN.

Die drei Feldgeräte sind identisch ausgestaltet und jeweils auf die gleiche Art mit dem Feldbus FB verbunden. In den Feldgeräten befindet sich jeweils eine schaltbare Verbindung zwischen der Aktivierungsleitung des (n-1)-ten Feldgerätes A(N-1) und der zweiten Versorgungsleitung V2. Diese Verbindung ist je nach Schalterstellung entweder direkt - wie hier jeweils dargestellt - oder verläuft über den Mikroprozessor MP des Feldgerätes, so dass der Mikroprozessor MP entweder mit Energie versorgt wird oder nicht. In der hier dargestellten Variante ist die Aktivierungsleitung AN des n-ten Feldgerätes FN weiterhin mit der nächsten Aktivierungsleitung des (n-1)-ten Feldgerätes A(N-1) und dem Mikroprozessor MP verbunden. Der Mikroprozessor MP ist überdies mit der Datenleitung D verbunden und das jeweilige Feldgerät ist insgesamt mit der ersten Versorgungsleitung V1 kontaktiert. Der jeweils aktivierte Sensor ist der n-te Sensor.

In dieser Ausgestaltung wird somit über die Verdrahtung das Aktivieren vorgenommen bzw. lässt sich hiermit auch ein nicht-aktivierbares Feldgerät "überspringen".

## Patentansprüche

1. Verfahren zum Betreiben eines Systems von Feldgeräten,
wobei das System mindestens zwei Feldgeräte aufweist,
und
wobei es sich bei den Feldgeräten insbesondere um Messgeräte und/oder Aktoren und/oder Anzeigegeräte handelt,
**dadurch gekennzeichnet,**
**dass** von einem ersten Feldgerät ein zweites Feldgerät aktiviert wird,
und
**dass** bei einer erfolgreichen Aktivierung eines vom ersten Feldgerät unterschiedlichen Feldgerätes das erste Feldgerät deaktiviert wird.

2. Verfahren nach Anspruch 1,
**dadurch gekennzeichnet,**
**dass** das System mindestens drei Feldgeräte aufweist,
und
**dass** von dem ersten Feldgerät im Fall einer erfolglosen Aktivierung des zweiten Feldgerätes ein drittes Feldgerät aktiviert wird.

3. Verfahren nach Anspruch 1,
**dadurch gekennzeichnet,**
**dass** das System mehrere Feldgeräte aufweist,
und
**dass** von dem ersten Feldgerät im Fall einer erfolglosen Aktivierung des zweiten Feldgerätes solange weitere Feldgeräte aktiviert werden, bis eine Aktivierung eines weiteren Feldgerätes erfolgreich ist.

4. Verfahren nach einem der Ansprüche 1 bis 3,
**dadurch gekennzeichnet,**
**dass** von mindestens einem Feldgerät nach seiner Aktivierung ein Signal an das Feldgerät übermittelt wird, von welchem es aktiviert worden ist.

5. Verfahren nach einem der Ansprüche 1 bis 4,
**dadurch gekennzeichnet,**
**dass** mindestens eine übergeordnete Einheit vorgesehen ist,
**dass** von mindestens einem Feldgerät nach seiner Aktivierung durch ein anderes Feldgerät ein Signal an die übergeordnete Einheit übermittelt wird,
und
**dass** das übermittelte Signal von dem anderen Feldgerät empfangen wird, von welchem das Feldgerät aktiviert worden ist.

6. Verfahren nach einem der Ansprüche 1 bis 5,
**dadurch gekennzeichnet,**
**dass** mindestens eine übergeordnete Einheit vorgesehen ist,
und
**dass** von mindestens einem Feldgerät bei einer erfolglosen Aktivierung eines anderen Feldgerätes ein Signal an die übergeordnete Einheit übermittelt wird.

7. Verfahren nach Anspruch 5 oder 6,
**dadurch gekennzeichnet,**
**dass** von einem Feldgerät die Aufgabe der übergeordneten Einheit erfüllt wird.

8. Verfahren nach Anspruch 5 oder 6,
**dadurch gekennzeichnet,**
**dass** von einem Leitsystem die Aufgabe der übergeordneten Einheit erfüllt wird.

9. Verfahren nach einem der Ansprüche 1 bis 8,
**dadurch gekennzeichnet,**
**dass** bei einer Deaktivierung eines Feldgerätes die Energieversorgung des Feldgerätes unter einen einstellbaren Wert gesetzt wird.

10. Verfahren nach Anspruch 9,
**dadurch gekennzeichnet,**
**dass** bei einer Deaktivierung eines Feldgerätes die Energieversorgung des Feldgerätes ausgeschaltet wird.

11. Verfahren nach Anspruch 9 oder 10,
**dadurch gekennzeichnet,**
**dass** bei einer Deaktivierung eines Feldgerätes das Feldgerät von einer Spannungsversorgung getrennt wird.

12. Verfahren nach einem der Ansprüche 1 bis 11,
**dadurch gekennzeichnet,**
**dass** bei einer Aktivierung eines Feldgerätes die Energieversorgung des Feldgerätes über einen einstellbaren Wert gesetzt wird.

13. Verfahren nach Anspruch 12,
**dadurch gekennzeichnet,**
**dass** bei einer Aktivierung eines Feldgerätes das Feldgerät mit einer Spannungsversorgung verbunden wird.

14. Verfahren nach einem der Ansprüche 1 bis 13,
**dadurch gekennzeichnet,**
**dass** mindestens eine übergeordnete Einheit vorgesehen ist,
und
**dass** mindestens ein Feldgerät durch die übergeordnete Einheit aktiviert wird.

## Claims

1. Process for operating a system of field devices, wherein the system has at least two field devices
and
wherein the field devices are particularly measuring devices and/or actuators and/or display devices,
**characterized in that**
a second field device is activated by a first device,
and
in the event of the successful activation of a field device that differs from the first field device, the first field device is disabled.

2. Process as claimed in Claim 1,
**characterized in that**
the system has at least three field devices,
and
the first field device activates a third field device if the activation of the second field device is unsuccessful.

3. Process as claimed in Claim 1,
**characterized in that**
the system has multiple field devices,
and
if the activation of the second field device is unsuccessful, the first field device activates as many field devices as needed until another field device is activated successfully.

4. Process as claimed in one of the Claims 1 to 3,
**characterized in that**
after being activated, at least one field device sends a signal to the field device that activated it.

5. Process as claimed in one of the Claims 1 to 4,
**characterized in that**
at least one higher-order unit is provided,
a signal is sent to the higher-order unit by at least one field device after being activated by another field device,
and
the transmitted signal is received by the other field device which activated the field device.

6. Process as claimed in one of the Claims 1 to 5
**characterized in that**
at least one higher-order unit is provided,
and
a signal is transmitted to the higher-order unit by at least one field device in the event of the unsuccessful activation of another field device.

7. Process as claimed in Claims 5 or 6,
**characterized in that**
a field device performs the function of the higher-order unit.

8. Process as claimed in Claims 5 or 6,
**characterized in that** ,
a control system performs the function of the higher-order unit.

9. Process as claimed in one of the Claims 1 to 8,
**characterized in that**
when a field device is disabled, the power supply of the field device is set to below an adjustable value.

10. Process as claimed in Claim 9,
**characterized in that**
when a field device is disabled, the power supply of the field device is switched off.

11. Process as claimed in Claim 9 or 10,
**characterized in that**
when a field device is disabled, the field device is disconnected from a power supply.

12. Process as claimed in one of the Claims 1 to 11,
**characterized in that**
when a field device is enabled, the power supply of the field device is set to above an adjustable value.

13. Process as claimed in Claim 12,
**characterized in that**
when a field device is enabled, the field device is connected to a power supply.

14. Process as claimed in one of the Claims 1 to 13,
**characterized in that**
at least one higher-order unit is provided,
and
at least one field device is activated by the higher-order unit.

## Revendications

1. Procédé destiné à l'exploitation d'un système d'appareils de terrain, le système comportant au minimum deux appareils de terrain,
et
pour lequel il s'agit, concernant les appareils de terrain, notamment d'appareils de mesure et/ou d'actionneurs et/ou d'appareils d'affichage,
**caractérisé en ce**
**qu'**un premier appareil de terrain active un deuxième appareil de terrain,
et
**qu'**en cas d'activation réussie d'un appareil de terrain différent du premier appareil de terrain, le premier appareil de terrain est désactivé.

2. Procédé selon la revendication 1,
**caractérisé en ce**
**que** le système comporte au moins trois appareils de terrain,
et
**qu'**en cas d'échec de l'activation du deuxième appareil de terrain, un troisième appareil de terrain est activé par le premier appareil de terrain.

3. Procédé selon la revendication 1,
**caractérisé en ce**
**que** le système comporte plusieurs appareils de terrain,
et
**qu'**en cas d'échec de l'activation du deuxième appareil de terrain, d'autres appareils de terrain sont activés par le premier appareil de terrain jusqu'à l'activation réussie d'un autre appareil de terrain.

4. Procédé selon l'une des revendications 1 à 3,
**caractérisé en ce**
**qu'**au moins un appareil de terrain transmet, après son activation, un signal à l'appareil de terrain, à partir duquel il a été activé.

5. Procédé selon l'une des revendications 1 à 4,
**caractérisé en ce**
**qu'**est prévue au moins une unité maître,
**qu'**au moins un appareil transmet, après son activation par un autre appareil de terrain, un signal à l'unité maître,
et
**que** le signal transmis est reçu par l'autre appareil de terrain, à partir duquel l'appareil de terrain a été activé.

6. Procédé selon l'une des revendications 1 à 5,
**caractérisé en ce**
**qu'**est prévue au moins une unité maître,
et
**qu'**en cas d'échec de l'activation d'un autre appareil de terrain, au moins un appareil de terrain transmet un signal à l'unité maître.

7. Procédé selon la revendication 5 ou 6,
**caractérisé en ce**
**que** la tâche de l'unité maître est remplie par un appareil de terrain.

8. Procédé selon la revendication 5 ou 6,
**caractérisé en ce**
**que** la tâche de l'unité maître est remplie par un système de contrôle-commande.

9. Procédé selon l'une des revendications 1 à 8,
**caractérisé en ce**
**qu'**en cas de désactivation d'un appareil de terrain, l'alimentation en énergie de l'appareil de terrain est définie au-dessous d'une valeur réglable.

10. Procédé selon la revendication 9,
**caractérisé en ce**
**qu'**en cas de désactivation d'un appareil de terrain, l'alimentation en énergie de l'appareil de terrain est coupée.

11. Procédé selon la revendication 9 ou 10,
**caractérisé en ce**
**qu'**en cas de désactivation d'un appareil de terrain, l'appareil de terrain est séparé d'une tension d'alimentation.

12. Procédé selon l'une des revendications 1 à 11,
**caractérisé en ce**
**qu'**en cas d'activation d'un appareil de terrain, l'alimentation en énergie de l'appareil de terrain est définie au-dessus d'une valeur réglable.

13. Procédé selon la revendication 12,
**caractérisé en ce**
**qu'**en cas d'activation d'un appareil de terrain, l'appareil de terrain est relié à une tension d'alimentation.

14. Procédé selon l'une des revendications 1 à 13,
**caractérisé en ce**
**qu'**est prévue au moins une unité maître,
et
**qu'**au moins un appareil de terrain est activé par l'unité maître.
